# EUROPÄISCHE PATENTANMELDUNG

(11) **EP 4 650 315 A1**
(43) Veröffentlichungstag der Anmeldung: **19.11.2025**
(21) Anmeldenummer: 25176406.4
(22) Anmeldetag: 14.05.2025
(51) Int. Cl.: B66C 1/68, A01G 23/00, B66C 3/00, B66C 13/12

(54) **PENDELGELENK ZUR BEFESTIGUNG HYDRAULISCH BETÄTIGTER ARBEITSGERÄTE**

(30) Priorität: 14.05.2024 AT 504002024
(71) Anmelder: Lechner, Konrad, 4591 Molln (AT)
(72) Erfinder: Lechner, Konrad, 4591 Molln (AT)
(74) Vertreter: KLIMENT & HENHAPEL

(57) **Zusammenfassung**

Pendelgelenk zur Befestigung von hydraulisch betätigten Arbeitsgeräten an einem Auslegerarm mit einem oberen Drehgelenk mit einer oberen Drehachse (D1) eines oberen Gelenkteils (G1) und einem unteren Drehgelenk mit einer senkrecht zur oberen Drehachse (D1) verlaufenden unteren Drehachse (D2) eines unteren Gelenkteils (G2), wobei die obere Drehachse (D1) aus zwei Halbachsen mit jeweils einem oberen Drehlager (2.1, 2.2) ausgeführt ist und die untere Drehachse (D2) zwischen zwei unteren Drehlagern (3.1, 3.2) verläuft ist, wobei Hydraulikleitungen (1) für das Arbeitsgerät am oberen Drehgelenk zwischen den beiden oberen Drehlagern (2.1, 2.2) geführt sind und am unteren Drehgelenk an einem der beiden unteren Drehlager (3.1, 3.2) außen vorbeigeführt sind. Es wird vorgeschlagen, dass beide Drehgelenke mit jeweils einem Bremssystem versehen sind, wobei durch Verwendung unterschiedlicher Bremssysteme die beiden Bremssysteme auf unterschiedliche Bremskräfte einstellbar sind.

## Beschreibung

Die Erfindung betrifft ein Pendelgelenk zur Befestigung von hydraulisch betätigten Arbeitsgeräten an einem Auslegerarm mit einem oberen Drehgelenk mit einer oberen Drehachse eines oberen Gelenkteils und einem unteren Drehgelenk mit einer senkrecht zur oberen Drehachse verlaufenden unteren Drehachse eines unteren Gelenkteils, wobei die obere Drehachse aus zwei Halbachsen mit jeweils einem oberen Drehlager ausgeführt ist und die untere Drehachse zwischen zwei unteren Drehlagern verläuft, wobei die Hydraulikleitungen für das Arbeitsgerät am oberen Drehgelenk zwischen den beiden oberen Drehlagern geführt sind und am unteren Drehgelenk an einem der beiden unteren Drehlager außen vorbeigeführt sind, gemäß dem Oberbegriff von Anspruch 1.

Arbeitsmaschinen mit einem Auslegerarm und einem am Auslegerarm befestigten Arbeitsgerät finden zahlreiche Anwendungen beispielsweise zum Beladen von Fahrzeugen mit Ladegut. In diesem Fall handelt es sich bei dem Arbeitsgerät beispielsweise um einen Greifer, der über eine entsprechende Hydraulik, die von einer Bedienkanzel der Arbeitsmaschine bedient wird, über Hydraulikleitungen hydraulisch betätigt wird und über eine zangenartige Bewegung das Ladegut aufnimmt. Über ein Verschwenken des Auslegerarms kann eine Verladetätigkeit ausgeübt werden. Das Pendelgelenk ermöglicht dabei eine Beweglichkeit des Arbeitsgeräts in zwei kartesische Raumrichtungen, um dynamische Belastungen auf den Auslegerarm zu reduzieren. Das Arbeitsgerät kann dabei mit einem ebenfalls hydraulisch betätigten Rotator für das Arbeitsgerät versehen sein, der Drehbewegungen des Arbeitsgeräts um eine vertikale Drehachse ermöglicht.

Ein gattungsgemäßes Pendelgelenk ist etwa aus der EP 1889808 A1 bekannt, bei dem ein oberes Drehgelenk mit einer oberen Drehachse eines oberen Gelenkteils und ein unteres Drehgelenk mit einer senkrecht zur oberen Drehachse verlaufenden unteren Drehachse eines unteren Gelenkteils vorgesehen sind, wobei die obere und die untere Drehachse jeweils aus zwei Halbachsen ausgeführt sind. Die Hydraulikleitungen für das Arbeitsgerät oder einem Rotator für das Arbeitsgerät sind dabei am oberen Drehgelenk zwischen den Drehlagern der Halbachsen geführt und verlaufen am unteren Drehgelenk an einem der beiden unteren Drehlager außen vorbei. Diese Ausführung dient einerseits dem Schutz der Hydraulikleitungen im praktischen Einsatz und andererseits aufgrund der schleifenförmigen Führung auch der Reduktion von Belastungen auf die Hydraulikleitungen und deren Anschlüsse im Zuge der Pendelbewegungen. Weitere Ausführungen von Pendelgelenken sind aus der WO 2020099722 A1, US 10100487 B2 und der WO 2004031067 A1 bekannt.

Ein Nachteil von Pendelgelenken der bekannten Art liegt darin, dass Auslenkungen im Zuge von Pendelbewegungen beim Aufnehmen von Ladegut oder auch beim bloßen Verschwenken des Auslegerarms ein längeres Nachschwingen des Arbeitsgeräts nach sich ziehen können. Es muss daher beispielsweise im Zuge von Ladetätigkeiten oft erst abgewartet werden, bis sich das Nachschwingen soweit reduziert hat, dass der Verladevorgang fortgesetzt werden kann.

Es wurde daher auch vorgeschlagen Bremssysteme vorzusehen, die das Nachschwingen reduzieren sollen. Ein gebremstes Schwenkgelenk ist etwa aus der EP 3409634 A1 bekannt, das allerdings nur über eine einzelne Drehachse verfügt und daher kein Pendelgelenk im Sinne der gegenständlichen Erfindung darstellt, sowie aus den bereits genannten WO 2020099722 A1 und WO 2004031067 A1. In der erstgenannten WO 2020099722 A1 sind die Hydraulikleitungen im Vergleich zur Ausführungsform der oben genannten EP 1889808 A1 nicht schleifenförmig sondern vergleichsweise straff geführt, sodass eine starke Bremsung der Pendelbewegung zur Reduktion von Belastungen auf die Hydraulikleitungen und deren Anschlüsse erforderlich ist. Die starke Bremsung wird durch Bremssysteme am oberen und am unteren Drehgelenk erreicht, die jeweils mithilfe von Bremsscheiben ausgeführt sind. In der Ausführungsform gemäß der zweitgenannten WO 2004031067 A1 wird nur eine der beiden Drehgelenke gebremst, und zwar durch ein Bremssystem, das wiederum mithilfe von Bremsscheiben ausgeführt ist. Die vorgeschlagenen Bremssysteme reduzieren zwar Pendelbewegungen, sind aber aufwändig in ihrer Ausführung und erhöhen die Baugröße der Drehgelenke. Im praktischen Einsatz erweisen sich im Gegensatz dazu möglichst schlanke Ausführungen von Pendelgelenken als vorteilhaft, um nicht nur die praktische Arbeit sondern vor allem auch das Einklappen des Auslegerarms im Zuge des Transports des Auslegers nicht zu behindern.

Es besteht daher das Ziel der Erfindung darin Pendelgelenke für Arbeitsmaschinen so zu verbessern, dass einerseits das Nachschwingen des Pendelgelenks möglichst stark reduziert wird, aber andererseits auch die Baugröße des Pendelgelenks so klein wie möglich gehalten wird.

Diese Ziele werden durch die Merkmale von Anspruch 1 erreicht. Anspruch 1 bezieht sich auf ein Pendelgelenk zur Befestigung von hydraulisch betätigten Arbeitsgeräten an einem Auslegerarm mit einem oberen Drehgelenk mit einer oberen Drehachse eines oberen Gelenkteils und einem unteren Drehgelenk mit einer senkrecht zur oberen Drehachse verlaufenden unteren Drehachse eines unteren Gelenkteils, wobei die obere Drehachse aus zwei Halbachsen mit jeweils einem oberen Drehlager ausgeführt ist und die untere Drehachse zwischen zwei unteren Drehlagern verläuft, wobei die Hydraulikleitungen für das Arbeitsgerät am oberen Drehgelenk zwischen den beiden oberen Drehlagern geführt sind und am unteren Drehgelenk an einem der beiden unteren Drehlager außen vorbeigeführt sind. Erfindungsgemäß wird hierbei vorgeschlagen, dass beide Drehgelenke mit jeweils einem Bremssystem versehen sind, wobei durch Verwendung unterschiedlicher Bremssysteme am oberen Drehgelenk und am unteren Drehgelenk die beiden Bremssysteme auf unterschiedliche Bremskräfte einstellbar sind.

Durch die unterschiedliche Aufteilung der Bremswirkung kann einerseits das Nachschwingen optimal verringert und andererseits auch die Baugröße minimal gehalten werden, wie noch näher erläutert wird. Die unterschiedliche Aufteilung der Bremswirkung wird durch unterschiedliche Ausführungen der Bremssysteme am unteren Gelenkteil im Vergleich zum oberen Gelenkteil sichergestellt. Insbesondere wird vorgeschlagen, dass das Bremssystem am unteren Drehgelenk auf eine größere Bremskraft eingestellt ist als das obere Bremssystem. Beim unteren Gelenkteil handelt es sich um das arbeitsgeräteseitige Gelenkteil, in dessen Nahbereich sich auch die Anschlüsse für die Hydraulikleitungen befinden. An diesem Gelenkteil erweist sich die Dämpfung von Schwingungen als besonders vorteilhaft hinsichtlich einer Schonung der Hydraulikleitungen und deren Anschlüsse. Beim oberen Gelenkteil handelt es sich um das auslegerseitige Gelenkteil, bei dem eine das Auslegerende kaum überragende, schlanke Bauausführung besonders vorteilhaft ist. Auf diese Weise werden einerseits die Hydraulikleitungen und deren Anschlüsse maximal entlastet, und andererseits Rücksicht auf die Baugröße des Pendelgelenks genommen.

Hinsichtlich einer konkreten Ausführungsform wird beispielsweise vorgeschlagen, dass es sich bei dem Bremssystem am oberen Drehgelenk um zwei jeweils seitlich der beiden oberen Drehlager angeordnete Tellerbremsen handelt, und das Bremssystem am unteren Drehgelenk mithilfe von Bremsscheiben ausgeführt ist, die zwischen den beiden unteren Drehlagern angeordnet sind. Unter einer Tellerbremse wird eine beispielsweise gemäß DIN 2093 ausgeführte kegelige Ringschale verstanden, die in Achsrichtung belastbar ist und sowohl ruhend als auch schwingend beansprucht werden kann, wobei aufgrund der rotationssymmetrischen Form die Kraftübertragung konzentrisch erfolgt. Sie sind vorwiegend aus hochwertigem Federstahl oder Edelstahl gefertigt und zeichnen sich vor allem durch ihre kompakte Bauweise aus. Bei einem vergleichsweise kleinen Einbauraum können sie daher gute Bremswirkung ausüben und verfügen selbst bei dynamischer Belastung über eine hohe Lebensdauer.

Insbesondere wird dabei vorgeschlagen, dass die beiden Tellerbremsen jeweils eine in axialer Richtung von außen verstellbare Druckmutter aufweisen. Mithilfe der Druckmutter kann die Bremskraft justiert werden und im Zuge des längeren Betriebes auch nachgestellt werden. Insbesondere kann die Bremskraft an das jeweilige Arbeitsgerät wie beispielsweise Holzzange, Prozessor oder Schrottmagnet angepasst werden, oder im Fall von Verschleiß sehr einfach und schnell nachgestellt werden.

Hinsichtlich des unteren Bremssystems wird vorgeschlagen, dass das Bremssystem am unteren Drehgelenk eine zentral angeordnete und mit dem oberen Gelenkteil verbundene zentrale Bremsscheibe aufweist, sowie zwei seitlich der zentralen Bremsscheibe angeordnete, seitliche Bremsscheiben, die mit dem unteren Gelenkteil verbunden sind. Der Anpressdruck der beiden seitlichen Bremsscheiben auf die zentrale Bremsscheibe bestimmt die Bremskraft. Bremsscheiben mit einer solchen Konfiguration übersteigen in ihrer Bremskraft in der Regel jene von Tellerbremsen, sie bauen aber auch größer. Daher wird das untere Bremssystem zwischen den beiden Drehlagern angeordnet.

Dabei kann auch vorgesehen sein, dass die Bremsscheiben des Bremssystems am unteren Drehgelenk mit Bremsbelägen versehen sind um die Bremswirkung zu optimieren und die Tellerbremse des Bremssystems am oberen Drehgelenk bremsbelagsfrei ausgeführt ist.

Des Weiteren wird eine Arbeitsmaschine mit einem Auslegerarm und einem erfindungsgemäßen Pendelgelenk vorgeschlagen.

Die Erfindung wird in weiterer Folge anhand von Ausführungsformen anhand der beiliegenden Zeichnungen näher erläutert. Es zeigen hierbei die
Fig. 1 eine schematische Darstellung eines erfindungsgemäßen Pendelgelenks mit einem oberen Gelenkteil und einem unteren Gelenkteil von vorne gesehen,
Fig. 2 eine schematische Darstellung des erfindungsgemäßen Pendelgelenks der Fig. 1 mit einem oberen Gelenkteil und einem unteren Gelenkteil von der Seite gesehen, und die
Fig. 3 eine schematische Darstellung eines Drehlagers einer Halbachse des oberen Gelenkteils des erfindungsgemäßen Pendelgelenks der Fig. 1 von vorne gesehen, wobei es sich um eine vergrößerte Darstellung des in der Fig. 1 strichliert eingezeichneten Bereiches handelt.

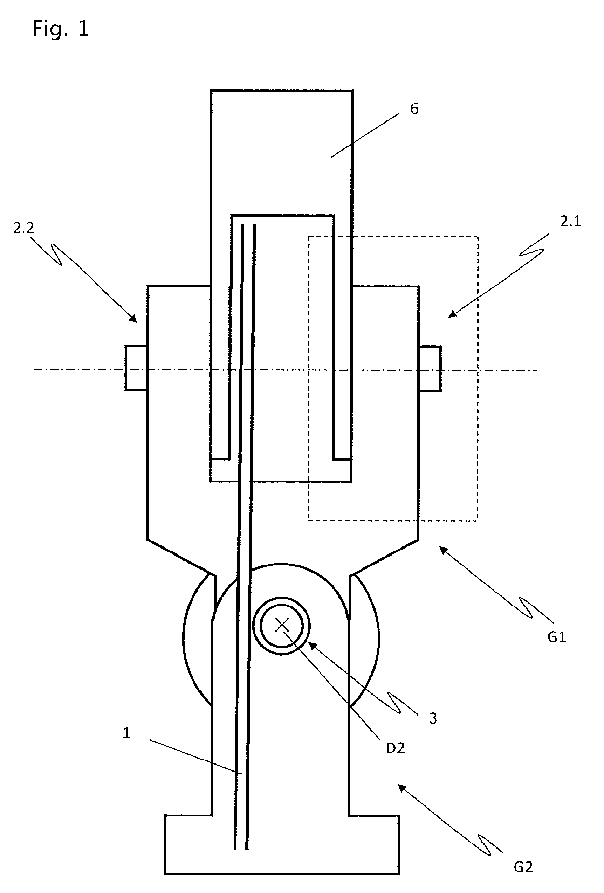

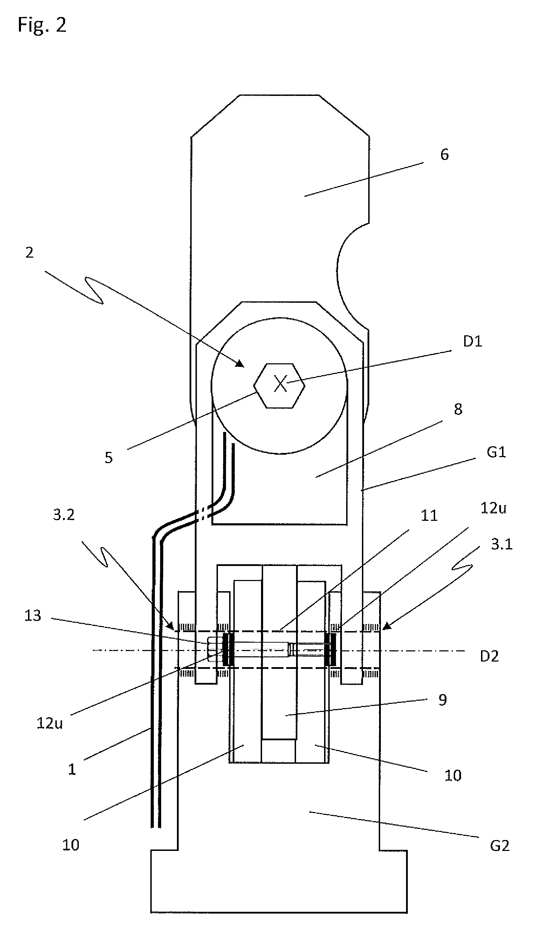

Zunächst wird auf die Fig. 1 Bezug genommen, die eine schematische Darstellung eines erfindungsgemäßen Pendelgelenks mit einem oberen Gelenkteil G1 und einem unteren Gelenkteil G2 von vorne gesehen zeigt. Beim oberen Gelenkteil G1 handelt es sich um das auslegerseitige Gelenkteil, bei dem eine das Auslegerende kaum überragende, schlanke Bauausführung besonders vorteilhaft ist. Beim unteren Gelenkteil G2 handelt es sich um das arbeitsgeräteseitige Gelenkteil, in dessen Nahbereich sich auch die Anschlüsse für die Hydraulikleitungen 1 befinden, wobei in den Fig. 1 und 2 lediglich eine Hydraulikleitung 1 zur grundsätzlichen Erläuterung der Leitungsführung gezeigt ist, es werden in der Praxis jedoch mehrere Hydraulikleitungen 1 Verwendung finden. Das obere Gelenkteil G1 weist ein oberes Drehgelenk mit einer oberen Drehachse D1 auf, und das untere Gelenkteil G2 weist ein unteres Drehgelenk mit einer senkrecht zur oberen Drehachse D1 verlaufenden unteren Drehachse D2 auf. Die obere Drehachse D1 wird aus zwei Halbachsen mit jeweils einem oberen Drehlager 2.1, 2.2 gebildet. Das untere Drehgelenk weist zwei untere Drehlager 3.1, 3.2 mit der Drehachse D2 auf, zwischen denen eine von den unteren Drehlagern 3.1, 3.2 gehaltene Hülse 11 geführt ist (siehe auch Fig. 2). Wie aus den Fig. 1 und 2 ersichtlich ist, werden die Hydraulikleitungen 1 für das Arbeitsgerät am oberen Drehgelenk zwischen den beiden oberen Drehlagern 2.1, 2.2 geführt und verlaufen am unteren Drehgelenk an einem der beiden unteren Drehlager 3.1, 3.2 außen vorbei, wo sie zu den in den Fig. 1 und 2 nicht gezeigten Anschlüssen für das Arbeitsgerät oder seinem Rotator führen. Diese Ausführung dient einerseits dem Schutz der Hydraulikleitungen 1 im praktischen Einsatz und andererseits aufgrund der schleifenförmigen Führung auch der Reduktion von Belastungen auf die Hydraulikleitungen 1 und deren Anschlüsse im Zuge der Pendelbewegungen.

Das Pendelgelenk ermöglicht eine Beweglichkeit des Arbeitsgeräts in zwei kartesische Raumrichtungen, um dynamische Belastungen auf den Auslegerarm zu reduzieren. Diese Auslenkungen im Zuge von Pendelbewegungen beim Aufnehmen von Ladegut oder auch beim bloßen Verschwenken des Auslegerarms können ein längeres Nachschwingen des Arbeitsgeräts nach sich ziehen. Es muss daher beispielsweise im Zuge von Ladetätigkeiten oft erst abgewartet werden, bis sich das Nachschwingen soweit reduziert hat, dass der Verladevorgang fortgesetzt werden kann.

Beide Drehgelenke sind daher mit jeweils einem Bremssystem versehen, wobei durch Verwendung unterschiedlicher Bremssysteme am oberen Drehgelenk und am unteren Drehgelenk die beiden Bremssysteme auf unterschiedliche Bremskräfte einstellbar sind, wie in weiterer Folge erläutert werden soll.

So wird beispielsweise vorgeschlagen das Bremssystem am oberen Drehgelenk in Form zweier jeweils seitlich der beiden oberen Drehlager 2.1, 2.2 angeordneter Tellerbremsen auszuführen, und das Bremssystem am unteren Drehgelenk mithilfe von Bremsscheiben, die zwischen den beiden unteren Drehlagern 3.1, 3.2 angeordnet sind.

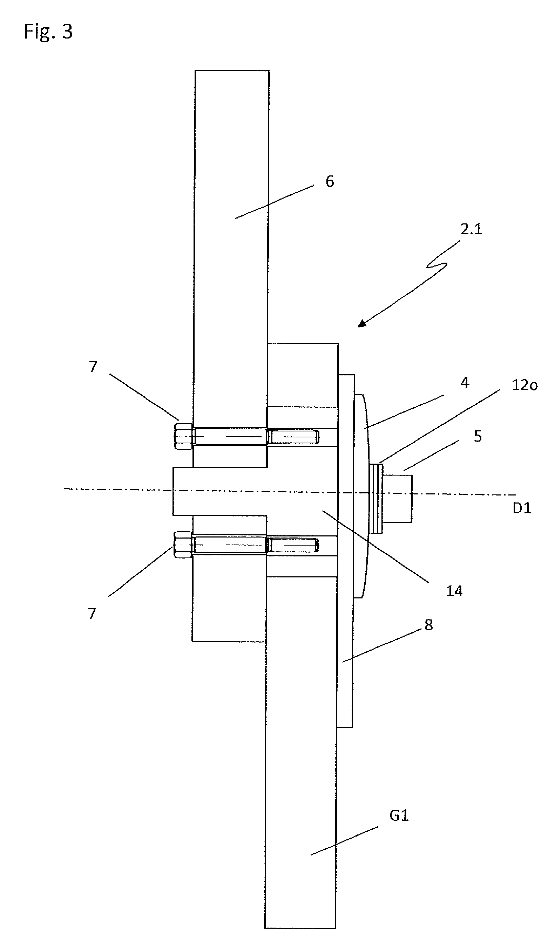

Das Bremssystem am oberen Drehgelenk wird mithilfe der Fig. 3 erläutert. Das obere Drehgelenk verbindet den oberen Gelenkteil G1 mit einer auslegerseitigen und gabelartig endenden Aufhängung 6. An den beiden gabelartigen Enden der Aufhängung 6 ist jeweils ein oberes Drehlager 2.1, 2.2 vorgesehen, das jeweils mithilfe eines Bolzens 14 gebildet wird, der über Schrauben 7 mit der Aufhängung 6 verbunden ist. Der obere Gelenkteil G1 ist um den Bolzen 14 drehbar. Zur relativen Schwingungsdämpfung zwischen der Aufhängung 6 und dem oberen Gelenkteil G1 ist an jedem der beiden oberen Drehlager 2.1, 2.2 eine Tellerbremse angeordnet. Die Tellerbremse umfasst eine auf der oberen Drehachse D1 angeordnete kegelige Ringschale 4, die in Achsrichtung belastbar ist und vorwiegend aus hochwertigem Federstahl oder Edelstahl gefertigt ist. Die als leicht konischer Ringkörper ausgeführte Ringschale 4 der Tellerbremse ist drehfest mit dem Bolzen 14 verbunden und wirkt reibschlüssig auf eine Druckplatte 8, die mit dem oberen Gelenkteil G1 verbunden ist. Mithilfe einer Tellerfeder 12o des oberen Drehlagers 2.1 wird schwingungsdämpfender Druck über die Druckplatte 8 auf den oberen Gelenkteil G1 ausgeübt. Die beiden Tellerbremsen weisen zudem jeweils eine in axialer Richtung von außen verstellbare Druckmutter 5 auf. Mithilfe der Druckmutter 5 kann die Bremskraft justiert werden und im Zuge des längeren Betriebes auch nachgestellt werden.

Hinsichtlich des unteren Bremssystems wird insbesondere auf die Fig. 2 verwiesen. Beim unteren Bremssystem wird gemäß der gezeigten Ausführungsform vorgeschlagen, dass das Bremssystem am unteren Drehgelenk mithilfe von Bremsscheiben 9, 10 ausgeführt ist, die zwischen den beiden unteren Drehlagern 3.1, 3.2 angeordnet sind. Das untere Drehgelenk weist hierfür eine von den beiden unteren Drehlagern 3.1, 3.2 mit der Drehachse D2 geführte Hülse 11 auf, die eine auf der Hülse 11 zentral angeordnete und mit dem oberen Gelenkteil G1 verbundene zentrale Bremsscheibe 9 trägt, sowie zwei seitlich der zentralen Bremsscheibe 9 angeordnete, seitliche Bremsscheiben 10, die mit dem unteren Gelenkteil G2 verbunden sind. Der Anpressdruck der beiden seitlichen Bremsscheiben 10 auf die zentrale Bremsscheibe 9 bestimmt die Bremskraft und kann mithilfe einer in der Hülse 11 angeordneten axialen Stellschraube 13 für Tellerfedern 12u.der unteren Drehlager 3.1, 3.2 justiert werden. Bremsscheiben mit einer solchen Konfiguration übersteigen in ihrer Bremskraft in der Regel jene von Tellerbremsen, sie bauen aber auch größer. Daher wird das untere Bremssystem zwischen den beiden Drehlagern 3.1, 3.2 angeordnet. Dabei kann auch vorgesehen sein, dass die Bremsscheiben des Bremssystems am unteren Drehgelenk mit Bremsbelägen versehen sind um die Bremswirkung zu optimieren, und die Tellerbremse des Bremssystems am oberen Drehgelenk bremsbelagsfrei ausgeführt ist.

Durch die unterschiedliche Aufteilung der Bremswirkung kann einerseits das Nachschwingen optimal verringert und andererseits auch die Baugröße minimal gehalten werden. Wie bereits ausgeführt wurde handelt es sich beim unteren Gelenkteil G2 um das arbeitsgeräteseitige Gelenkteil, in dessen Nahbereich sich auch die Anschlüsse für die Hydraulikleitungen 1 befinden. An diesem unteren Gelenkteil G2 erweist sich die Dämpfung von Schwingungen als besonders vorteilhaft hinsichtlich einer Schonung der Hydraulikleitungen 1 und deren Anschlüsse. Beim oberen Gelenkteil G1 handelt es sich um das auslegerseitige Gelenkteil, bei dem eine das Auslegerende kaum überragende, schlanke Bauausführung besonders vorteilhaft ist. Auf diese Weise werden einerseits die Hydraulikleitungen 1 und deren Anschlüsse maximal entlastet, und andererseits Rücksicht auf die Baugröße des Pendelgelenks genommen. Durch die besondere Führung der Hydraulikleitungen 1 für das Arbeitsgerät oder einem Rotator für das Arbeitsgerät am oberen Drehgelenk zwischen den oberen Drehlagern 2.1, 2.2 und am unteren Drehgelenk schlaufenförmig an einem der beiden unteren Drehlager 3.2 außen vorbei werden zudem die Hydraulikleitungen 1 vor Beschädigungen geschützt.

## Patentansprüche

1. Pendelgelenk zur Befestigung von hydraulisch betätigten Arbeitsgeräten an einem Auslegerarm mit einem oberen Drehgelenk mit einer oberen Drehachse (D1) eines oberen Gelenkteils (G1) und einem unteren Drehgelenk mit einer senkrecht zur oberen Drehachse (D1) verlaufenden unteren Drehachse (D2) eines unteren Gelenkteils (G2), wobei die obere Drehachse (D1) aus zwei Halbachsen mit jeweils einem oberen Drehlager (2.1, 2.2) ausgeführt ist und die untere Drehachse (D2) zwischen zwei unteren Drehlagern (3.1, 3.2) verläuft, wobei Hydraulikleitungen (1) für das Arbeitsgerät am oberen Drehgelenk zwischen den beiden oberen Drehlagern (2.1, 2.2) geführt sind und am unteren Drehgelenk an einem der beiden unteren Drehlager (3.1, 3.2) außen vorbeigeführt sind, **dadurch gekennzeichnet, dass** beide Drehgelenke mit jeweils einem Bremssystem versehen sind, wobei durch Verwendung unterschiedlicher Bremssysteme am oberen Drehgelenk und am unteren Drehgelenk die beiden Bremssysteme auf unterschiedliche Bremskräfte einstellbar sind.

2. Pendelgelenk nach Anspruch 1, **dadurch gekennzeichnet, dass** das Bremssystem am unteren Drehgelenk auf eine größere Bremskraft eingestellt ist als das obere Bremssystem.

3. Pendelgelenk nach Anspruch 1 oder 2, **dadurch gekennzeichnet, dass** es sich bei dem Bremssystem am oberen Drehgelenk um zwei jeweils seitlich der beiden oberen Drehlager (2.1, 2.2) angeordnete Tellerbremsen handelt, und das Bremssystem am unteren Drehgelenk mithilfe von Bremsscheiben (9, 10) ausgeführt ist, die zwischen den beiden unteren Drehlagern (3.1, 3.2) angeordnet sind.

4. Pendelgelenk nach Anspruch 3, **dadurch gekennzeichnet, dass** die beiden Tellerbremsen jeweils eine in axialer Richtung von außen verstellbare Druckmutter (5) aufweisen.

5. Pendelgelenk nach Anspruch 3 oder 4, **dadurch gekennzeichnet, dass** das Bremssystem am unteren Drehgelenk eine zentral angeordnete und mit dem oberen Gelenkteil (G1) verbundene zentrale Bremsscheibe (9) aufweist, sowie zwei seitlich der zentralen Bremsscheibe (9) angeordnete, seitliche Bremsscheiben (10), die mit dem unteren Gelenkteil (G2) verbunden sind.

6. Pendelgelenk nach einem der Ansprüche 3 bis 5, **dadurch gekennzeichnet, dass** die Bremsscheiben (9, 10) des Bremssystems am unteren Drehgelenk mit Bremsbelägen versehen sind und die Tellerbremse des Bremssystems am oberen Drehgelenk bremsbelagsfrei ausgeführt ist.

7. Arbeitsmaschine mit einem Auslegerarm und einem Pendelgelenk nach einem der Ansprüche 1 bis 6.
